**Europäisches Patentamt**

**European Patent Office**

**Office européen des brevets**

(19)

(11) Veröffentlichungsnummer: **0 144 306**
**B1**

(12) # EUROPÄISCHE PATENTSCHRIFT

(45) Veröffentlichungstag der Patentschrift:
08.06.88

(51) Int. Cl.⁴: **B 23 B 3/16,** B 23 B 3/16,
**B 23 Q 3/157**

(21) Anmeldenummer: **84890221.9**

(22) Anmeldetag: **21.11.84**

(54) **Drehmaschine.**

(30) Priorität: 01.12.83 AT 4192/83

(43) Veröffentlichungstag der Anmeldung:
12.06.85 Patentblatt 85/24

(45) Bekanntmachung des Hinweises auf die Patenterteilung:
08.06.88 Patentblatt 88/23

(84) Benannte Vertragsstaaten:
BE CH DE FR GB IT LI LU NL SE

(56) Entgegenhaltungen:
DE-A-2 407 265
DE-A-2 846 318
DE-A-3 202 042
DE-C-359 804
LU-A-82 388

(73) Patentinhaber: **VOEST- ALPINE Aktiengesellschaft,**
**Muldenstrasse 5, A-4020 Linz (AT)**

(72) Erfinder: **Der Erfinder hat auf seine Nennung**
**verzichtet**

(74) Vertreter: **Hübscher, Gerhard, Dipl.- Ing.,**
**Patentanwälte Dipl.- Ing. Gerhard Hübscher**
**Dipl.- Ing. Helmut Hübscher Dipl.- Ing. Heiner**
**Hübscher Spittelwiese 7, A-4020 Linz (AT)**

**Beschreibung**

Die Erfindung bezieht sich auf eine Drehmaschine mit einem parallel zu der durch den Spindelkasten und den Reitstock bestimmten Hauptachse verfahrbaren Längsschlitten, auf dem zwei mit Werkzeugaufnahmen versehene Querschlitten nebeneinander verschiebbar gelagert sind.

Um mit einer Werkstückaufspannung ein Werkstück nicht nur mit Hilfe von Drehwerkzeugen, sondern auch mit Hilfe von Bohr- und Fräswerkzeugen bearbeiten zu können, ist es bekannt, auf einem Längsschlitten einer Drehmaschine einen über einen Querschlitten anstellbaren Revolverkopf aufzubauen, der wenigstens einen Werkzeugkopf mit einer Werkzeugspindel trägt, die in der Arbeitsstellung des Werkzeugkopfes mit einem am Querschlitten gelagerten Antrieb kuppelbar ist. Mit dem in die Werkzeugaufnahme des Werkzeugkopfes eingesetzten Bohr- oder Fräswerkzeug kann das in die Drehmaschine eingespannte Werkstück zusätzlich bearbeitet werden, wobei allerdings die Ausrichtung des Werkzeuges durch seine Lage gegenüber dem Revolverkopf festgelegt ist, so daß für eine Bearbeitung in Richtung der durch den Spindelkasten und den Reitstock bestimmten Hauptachse und für eine Bearbeitung senkrecht zu dieser Hauptachse je ein gesonderter Werkzeugkopf erforderlich ist, was einen erheblichen Aufwand bedingt. Die Lagerung der Werkzeugköpfe für die Fräs- und Bohrwerkzeuge auf einem Revolverkopf bringt außerdem Schwierigkeiten hinsichtlich einer ausreichenden Werkzeugabstützung und bezüglich der Gewährleistung enger Bearbeitungstoleranzen mit sich. Dazu kommt noch, daß der Einsatz der Bohr- und Fräswerkzeuge durch den Revolverkopf selbst behindert werden kann, wenn das Werkstück oder der Reitstock die für eine Werkzeuganstellung erforderliche Bewegungsfreiheit des Revolverkopfes einschränkt.

Um diese Nachteile zu vermeiden, ist eine Drehmaschine bekanntgeworden, bei der ein Werkzeugkopf mit einer Werkzeugspindel für ein Bohr- oder Fräswerkzeug und mit einer Werkzeugaufnahme für ein Drehwerkzeug vorgesehen ist. Da die Achsen der Werkzeugaufnahmen für das Bohr- und Fräswerkzeug einerseits und für das Drehwerkzeug anderseits zueinander senkrecht stehen und der Werkzeugkopf gegenüber dem ihn tragenden Querschlitten um eine Schwenkachse drehbar gelagert ist, die in Richtung der Winkelhalbierenden zwischen den beiden Achsen der Werkzeugaufnahmen verläuft und unter 45° zur Hauptachse der Drehmaschine geneigt ist, können die Achsen der Werkzeugaufnahmen durch ein Verdrehen des Werkzeugkopfes wahlweise parallel oder senkrecht zur Hauptachse ausgerichtet werden, was die Bearbeitungsmöglichkeiten entsprechend vergrößert. Allerdings steht für den Werkzeugwechsel kein Werkzeugmagazin im Arbeitsbereich zur Verfügung, so daß sich die Nebenzeiten für den Werkzeugwechsel erheblich verlängern, selbst wenn seitlich neben der Drehmaschine eine geeignete Werkzeugwechseleinrichtung vorgesehen wird, weil eben der den Werkzeugkopf aufweisende Längsschlitten aus den Arbeitsbereich zur Werkzeugwechseleinrichtung verfahren werden muß.

Schließlich ist es bekannt (DE-C 353 819), einen Längsschlitten einer Drehmaschine mit zwei Querschlitten zu versehen, wobei die beiden Querschlitten über einen entsprechenden Antrieb nur gegengleich verstellt werden können. Diese gegengleiche Verstellung schränkt jedoch den Freiraum für die Werkzeuganstellung so stark ein, daß ein sinnvoller Einsatz von Drehwerkzeugen einerseits und Fräs- und Bohrwerkzeugen anderseits nicht möglich ist.

Der Erfindung liegt somit die Aufgabe zugrunde, diese Mängel zu vermeiden und eine Drehmaschine anzugeben, mit deren Hilfe sowohl Drehwerkzeuge als auch Bohr- und Fräswerkzeuge bei einer weitgehenden Freiheit der Bearbeitungsmöglichkeiten eingesetzt werden können, ohne längere Nebenzeiten für einen Werkzeugwechsel in Kauf nehmen zu müssen.

Ausgehend von einer Drehmaschine der eingangs geschilderten Art löst die Erfindung die gestellte Aufgabe dadurch, daß die beiden Querschlitten je für sich verstellbar und aus dem Bereich des Spindelkastens bzw. des Reitstockes verfahrbar sind, daß einer der beiden Querschlitten auf der vom anderen Querschlitten abgewandten Seite einen Revolverkopf mit einer zur Hauptachse parallelen Drehachse trägt und daß der andere Querschlitten im Bereich seiner der Hauptachse zugekehrten Stirnseite einen Werkzeugkopf mit einer antreibbaren Werkzeugspindel aufweist, der um eine zur Werkzeugspindel, zur Hauptachse und zur Führung des Querschlittens senkrechte Schwenkachse drehverstellbar gelagert ist.

Durch das Vorsehen von zwei voneinander unabhängig verstellbaren Querschlitten wird es stets möglich, den im Einsatz befindlichen Querschlitten über den Längsschlitten unbehindert vom jeweils anderen Schlitten zwischen dem Spindelkasten und dem Reitstock frei zu verstellen, weil der in der Ruhelage befindliche Querschlitten über den Spindelkasten bzw. den Reitstock hinaus bewegt werden kann. Die Anordnung der Drehwerkzeuge auf einem Revolverkopf gewährleistet einen raschen Werkzeugwechsel, wobei auf die Antriebsbedingungen des Fräs- oder Bohrwerkzeuges keine Rücksicht genommen werden muß. Der die Bohr- und Fräswerkzeuge aufnehmende Werkzeugkopf mit der antreibbaren Werkzeugspindel ist ja in einem gesonderten Schlitten untergebracht, so daß die für den Einsatz eines Bohr- oder Fräswerkzeuges jeweils günstigsten Bedingungen eingehalten werden können. Die senkrecht zur Hauptachse, zur Führung des Querschlittens und zur Werkzeugspindel verlaufende Schwenkachse des Werkzeugkopfes bietet dabei eine universelle Einsatzmöglichkeit für die Bohr- und Fräswerkzeuge, die auf Grund der gegebenen Einstellachsen eine weitgehende Freiheit hinsichtlich der Werkzeuganstellung sicherstellen.

Die Einstellungsmöglichkeiten können zusätzlich vergrößert werden, wenn der Werkzeugkopf in Richtung seiner Schwenkachse auf dem Querschlitten verschiebbar gelagert ist.

Ist dem Querschlitten mit dem stirnseitigen Werkzeugkopf auf der vom anderen Querschlitten abgewandten Seite ein mit dem Längsschlitten verfahrbares Werkzeugmagazin mit einer Werkzeugwechseleinrichtung zugeordnet, so kann auch für einen raschen Wechsel der Bohr- und Fräswerkzeuge gesorgt werden. Der Längsschlitten braucht zum Werkzeugwechsel nicht mehr aus dem Arbeitsbereich verfahren zu werden, was diesbezügliche Nebenzeiten einspart. Die Drehverstellung des Werkzeugkopfes um seine zur Hauptachse und zur Werkzeugspindel senkrechte Schwenkachse erlaubt eine Ausrichtung der Werkzeugspindel parallel zur Hauptachse, so daß für den Werkzeugwechsel keine zusätzliche Drehbewegung des Werkzeuges zum richtigen Einsetzen in die Werkzeugaufnahme des Werkzeugkopfes notwendig wird. Das Werkzeugmagazin kann aus einer Trommel oder Scheibe mit zur Hauptachse paralleler Drehachse bestehen, wobei ein Greifarm den Werkzeugtransport zwischen dem Werkzeugkopf und dem Werkzeugmagazin übernehmen kann.

In der Zeichnung ist der Erfindungsgegenstand beispielsweise dargestellt. Es zeigen

Fig. 1 eine erfindungsgemäße Drehmaschine in einer schematischen Draufsicht auf ihr Schrägbett,

Fig. 2 eine Stirnansicht dieser Drehmaschine in Richtung auf den Spindelkasten bei abgenommenem Reitstock,

Fig. 3 eine Stirnansicht der Drehmaschine in Richtung auf den Reitstock bei abgenommenem Spindelkasten und

Fig. 4 eine Seitenansicht des die beiden Querschlitten tragenden Längsschlitten in einem größeren Maßstab.

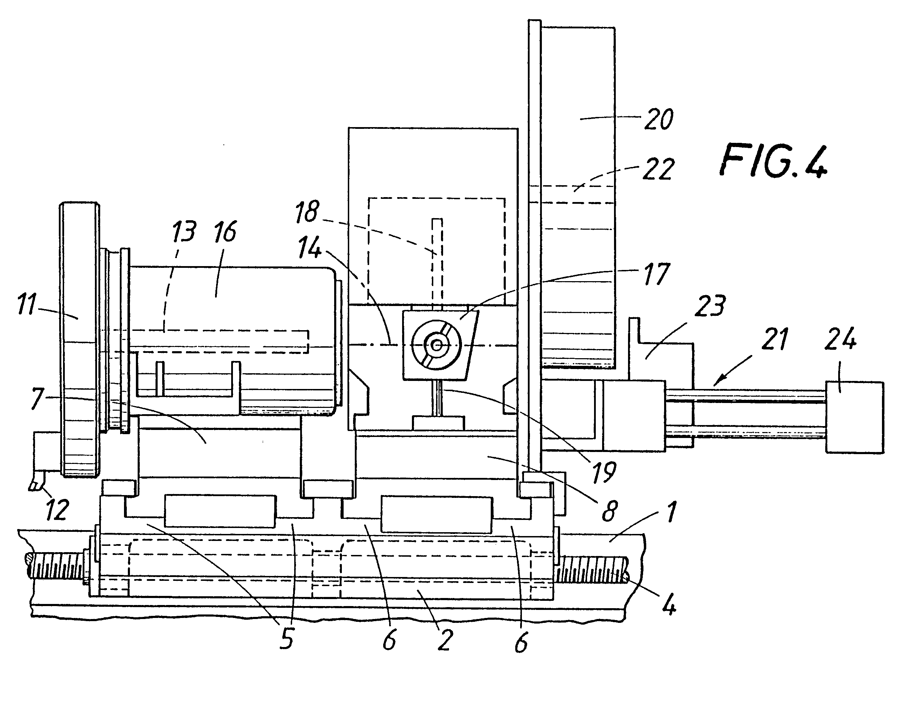

Die dargestellte Drehmaschine besteht in üblicher Weise aus einem Schrägbett 1, auf dem ein Längsschlitten 2 in einer Flachführung 3 des Schrägbettes 1 verschiebbar gelagert und mit Hilfe einer Spindel 4 (Fig. 4) antreibbar ist. Der Längsschlitten 2 weist zwei senkrecht zu seiner Flachführung 3 verlaufende Führungen 5 und 6 für zwei Querschlitten 7 und 8 auf, die ebenfalls über je eine Spindel verstellt werden können, was aber aus Übersichtlichkeitsgründen nicht dargestellt ist. Von den beiden Querschlitten 7 und 8 trägt der dem Spindelkasten 9 mit dem Spannfutter 10 zugekehrte Querschlitten 7 einen Revolverkopf 11, der mit Drehwerkzeugen 12 bestückt ist. Die Drehachse 13 des Revolverkopfes 11 verläuft dabei parallel zu der Hauptachse 14, die durch den Spindelkasten 9 bzw. dessen Futter 10 und dem Reitstock 15 bestimmt wird. Durch eine entsprechende Drehverstellung des Revolverkopfes über einen Antrieb 16 kann ein rascher Werkzeugwechsel vorgenommen werden.

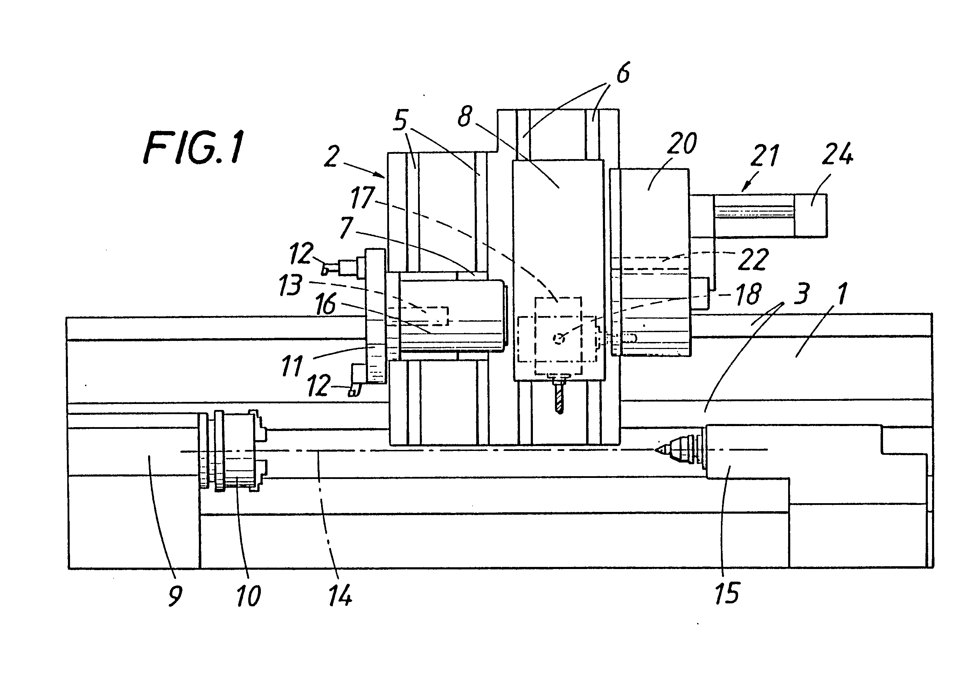

Der andere, dem Reitstock 15 zugekehrte Querschlitten 8 trägt im Bereich seiner der Hauptachse 14 zugewandten Stirnseite einen Werkzeugkopf 17 mit einer angetriebenen Werkzeugspindel, so daß neben einer Bearbeitung mit Drehwerkzeugen auch eine Bearbeitung mit einem Bohr- oder Fräswerkzeug vorgenommen werden kann, ohne das Werkstück umspannen zu müssen. Die Anordnung ist dabei so getroffen, daß der Werkzeugkopf 17 um eine zur Werkzeugspindel, zur Hauptachse 14 und zur Führung 6 des Querschlittens 8 senkrechte Schwenkachse 18 drehverstellbar gelagert ist. Der Werkzeugkopf kann folglich aus der in der Fig. 1 eingezeichneten Stellung der Werkzeugspindel senkrecht zur Hauptachse 14 nach beiden Seiten bis zu einer zur Hauptachse 14 parallelen Lage verschwenkt werden, wobei alle Zwischenstellungen möglich sind. Damit ist eine universelle Einsatzmöglichkeit der verwendeten Bohr- und Fräswerkzeuge sichergestellt.

Zusätzlich zu der Drehverstellung um die Schwenkachse 18 kann der Werkzeugkopf 17 auch noch entlang der Schwenkachse 18 verschoben werden, wofür ein Schraubentrieb 19 vorgesehen ist. Damit wird eine Werkzeugnachstellung beispielsweise zum Ausgleich von Werkzeugabnützungen u.dgl. möglich.

Die Drehverstellung des Werkzeugkopfes 17 um die Schwenkachse 18 erlaubt es darüber hinaus, den Werkzeugkopf 17 mit einer an ein Werkzeugmagazin 20 angeschlossenen Werkzeugwechseleinrichtung 21 zu koppeln. Zu diesem Zweck ist das Werkzeugmagazin 20 um eine zur Hauptachse 14 parallele Achse 22 verdrehbar auf dem Längsschlitten 2 gelagert, der auch die Werkzeugwechseleinrichtung 21 trägt. Diese Werkzeugwechseleinrichtung besteht im wesentlichen aus einem Doppelgreifer 23, der einerseits um eine zur Hauptachse 14 parallele Achse verschwenkt und andererseits in Richtung seiner Schwenkachse mittels eines Stellantriebes 24 verschoben werden kann. Damit wird es in einfacher Weise möglich, ein Werkzeug aus dem Werkzeugmagazin 20 zu entnehmen und dem entsprechend verschwenkten Werkzeugkopf 17 zuzuführen, wobei durch den Doppelgreifer 23 das in den Werkzeugkopf eingesetzte Bohr- oder Fräswerkzeug in einem Arbeitsgang entnommen werden kann.

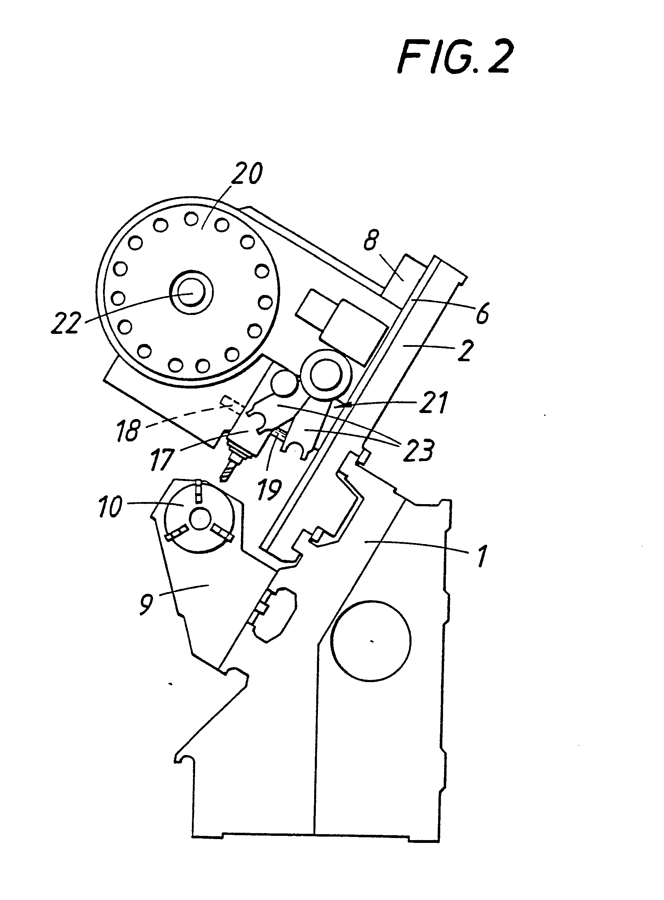

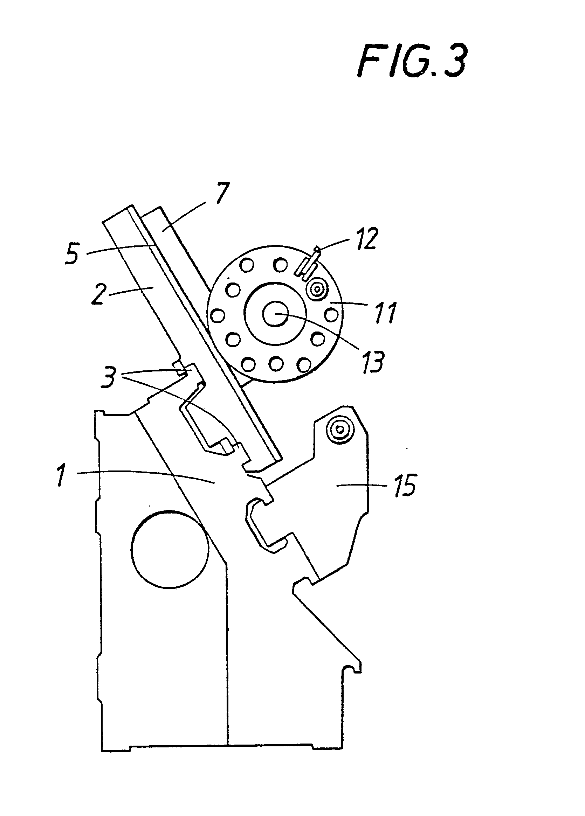

Wie insbesondere die Fig. 1 bis 3 zeigen, können die beiden Querschlitten 7 und 8 auf ihren Führungen 5 und 6 soweit von der Hauptachse 14 wegverschoben werden, daß der Längsschlitten 2 unbehindert an dem Spindelkasten 9 bzw. an dem Reitstock 15 vorbeibewegt werden kann. Damit ist sichergestellt, daß auf der einen Seite das Bohr- oder Fräswerkzeug bis unmittelbar an das Spannfutter 10 des Spindelkastens 9 und auf der anderen Seite ein Drehwerkzeug 12 unmittelbar an den Reitstock 15 herangefahren werden kann, obwohl sich der Querschlitten 7 auf der dem Spindelkasten 9 zugewandten Seite des Querschlittens 8 mit dem Werkzeugkopf 17 und umgekehrt der Querschlitten 8 sich bezüglich des Reitstockes 15 vor dem Querschlitten 7 mit dem Revolverkopf 11 befinden.

**Patentansprüche**

1. Drehmaschine mit einem parallel zu der durch den Spindelkasten (9) und den Reitstock (15) bestimmten Hauptachse (14) verfahrbaren Längsschlitten (2), auf dem zwei mit Werkzeugaufnahmen versehene Querschlitten (7, 8) nebeneinander verschiebbar gelagert sind, dadurch gekennzeichnet, daß die beiden Querschlitten (7, 8) je für sich verstellbar und aus dem Bereich des Spindelkastens (9) bzw. des Reitstockes (15) verfahrbar sind, daß einer der beiden Querschlitten (7, 8) auf der vom anderen Querschlitten (8) abgewandten Seite einen Revolverkopf (11) mit einer zur Hauptachse (14) parallelen Drehachse (13) trägt und daß der andere Querschlitten (7) im Bereich seiner der Hauptachse (14) zugekehrten Stirnseite einen Werkzeugkopf (17) mit einer antreibbaren Werkzeugspindel aufweist, der um eine zur Werkzeugspindel, zur Hauptachse (14) und zur Führung (6) des Querschlittens (8) senkrechte Schwenkachse (18) drehverstellbar gelagert ist.

2. Drehmaschine nach Anspruch 1, dadurch gekennzeichnet, daß der Werkzeugkopf (17) in Richtung seiner Schwenkachse (18) auf dem Querschlitten (8) verschiebbar gelagert ist.

3. Drehmaschine nach Anspruch 1 oder 2, dadurch gekennzeichnet, daß dem Querschlitten (8) mit dem stirnseitigen Werkzeugkopf (17) auf der vom anderen Querschlitten (7) abgewandten Seite ein mit dem Längsschlitten (2) verfahrbares Werkzeugmagazin (20) mit einer Werkzeugwechseleinrichtung (21) zugeordnet ist.

**Claims**

1. A lathe having a longitudinal slide (2) movable parallel to the main axis (14) defined by the headstock (9) and tailstock (15), two cross slides (7, 8) which have tool holders being movably mounted beside one another on the longitudinal side (2), characterised in that the two cross slides (7, 8) are each adjustable individually and movable away from the region of the headstock (9) and tailstock (15) respectively, one of the two cross slides (7, 8) carries, on the side remote from the other cross slide (8), a turret head (11) with an axis of rotation (13) parallel to the main axis (14), and the other cross slide (7) has, near its end face facing the main axis (14), a tool head (17) having a drivable tool spindle mounted for rotation around a pivot axis (18) perpendicular to the tool spindle, to the main axis (14) and to the guide (6) of the cross slide (8).

2. A lathe according to claim 1, characterised in that the tool head (17) is mounted on the cross slide (8) for movement in the direction of its pivot axis (18).

3. A lathe according to claim 1 or 2, characterised in that a tool magazine (20) movable with the longitudinal slide (2) and having a tool-changing device (21) is associated with the cross slide (8) having the end-face tool head (17) on the side remote from the other cross slide (7).

**Revendications**

1. Tour comprenant un chariot longitudinal (2) qui peut se déplacer parallèlement à l'axe principal (14) défini par la poupée fixe (9) et par la poupée mobile (15), et sur lequel sont montés, mobiles en translation l'un à côté de l'autre, deux chariots transversaux (7, 8) munis de porte-outils, caractérisé par le fait que les deux chariots transversaux (7, 8) peuvent être déplacés individuellement et en dehors de la zone de la poupée fixe (9) et de la poupée mobile (15), que l'un des deux chariots transversaux (7, 8) porte, sur le côté qui est le plus éloigné de l'autre chariot transversal (8'), une tête révolver (11) présentant un axe de rotation (13) parallèle à l'axe principal (14) et que l'autre chariot transversal (7) présente, dans la région de sa face frontale qui regarde vers l'axe principal (14), une tête porte-outil (17) équipée d'une broche porte-outil pouvant être entraînée par un moteur et qui est montée pour pouvoir tourner autour d'un axe de pivotement (18) perpendiculaire à la broche porte-outil, à l'axe principal (14) et à la glissière (6) du chariot transversal (8).

2. Tour selon la revendication 1, caractérisé par le fait que la tête porte-outil (17) est montée de façon à pouvoir se déplacer en translation sur le chariot transversal (8) dans une direction parallèle à son axe de pivotement (18).

3. Tour selon la revendication 1 ou 2, caractérisé par le fait qu'au chariot transversal (8), équipé de la tête porte-outil frontale (17), est associé, sur le côté qui est à l'opposé de l'autre chariot transversal (7), un magasin d'outils (20) équipé d'un dispositif de changement d'outils (21), qui peut se déplacer avec le chariot longitudinal (2).

FIG.1

0 144 306

# FIG.2

# FIG.3

FIG.4